# EUROPEAN PATENT APPLICATION

(11) **EP 4 484 461 A1**
(43) Date of publication of application: **01.01.2025**
(21) Application number: 23182196.8
(22) Date of filing: 28.06.2023
(51) Int. Cl.: C08G 59/22, C08G 59/24, C08G 59/32, C08G 59/38, C08G 59/40, C08G 59/68, C09J 163/00

(54) **HEAT-CURABLE SEALING COMPOSITION**

(71) Applicant: Sika Technology AG, 6340 Baar (CH)
(72) Inventor: BÖFER, Cornelia, 8105 Regensdorf (CH)
(74) Representative: Sika Patent Attorneys

(57) **Abstract**

The invention relates to a thermosetting one-component epoxy resin composition comprising at least one liquid aromatic epoxy resin **A1,** at least one liquid aliphatic epoxy resin **A2,** at least one curing agent **B** for epoxy resins, where the curing agent **B** is a dihydrazide and at least one at least one toughness improver **D.** The weight ratio of the at least one liquid epoxy resin **A1** to the at least one liquid epoxy resin **A2 (A1/A2)** is from 0.25 - 5.0. The thermosetting one-component epoxy resin composition that can be used as a sealing composition which does not show bubble formation at curing temperatures at 210 °C and provides good mechanical and storage properties, especially with respect to elongation at break performance and storage at elevated temperature between 50 °C - 60 °C.

## Description

### Technical Field

The invention relates to the field of a sealing composition for automotive body work in particular.

### Prior Art

In automotive body work, individual metal plates are joined together. The metal plates that are used are oiled to reduce corrosion as much as possible. Furthermore, typically, the vehicle body will be passed through a CDC bath (CDC = cathodic dip coating) at the end of assembly of the body, so that the body is coated with a so-called CDC paint, which is then baked in a CDC oven. Good CDC coating over the full surface area forms the basis for long-term use of a vehicle because it makes a significant contribution toward corrosion resistance.

Therefore, usually on these oiled metal plates like steel substrates are usually coated with a sealer which is required to adhere well to oil-coated sheet metal, need not be cured with heat or UV radiation before being immersed in a paint bath and nevertheless rapidly build up strength.

WO 2012/084806 provides a heat-curable sealing compound compositions having a dual curing mechanism. On the one hand, there is rapid formation of a skin due to the reaction of polyisocyanates with polyaldimines in contact with air and/or atmospheric humidity; this ensures that the sealing compound can pass through the CDC bath undamaged. The paint may be deposited on the sealing compound in a high-quality application. In another step, the sealing compound cures due to heat such as that prevailing in the CDC oven. However, there is in some cases a bubble formation problem in these sealers.

It is further important, that heat-curable sealing compositions have good mechanical and storage properties, especially with respect to elongation at break performance and storage at elevated temperature between 50 °C - 60 °C.

### Summary of the Invention

The object of the present invention is therefore to make available a thermosetting one-component epoxy resin composition that can be used as a sealing composition which does not show bubble formation at curing temperatures at 210 °C and provides good mechanical and storage properties, especially with respect to elongation at break performance and storage at elevated temperature between 50 °C - 60 °C.

It has surprisingly been found that the thermosetting one-component epoxy resin composition according to claim 1 achieve this object.

The thermosetting one-component epoxy resin composition is therefore suitable for use as a sealing compound in automotive bodies in particular.

Additional aspects of the invention are the subject matter of further independent claims. Especially preferred embodiments of the invention are the subject matter of the dependent claims.

### Methods of Implementing the Invention

The present invention relates to a thermosetting one-component epoxy resin composition comprising
a) at least one liquid epoxy resin **A1** having an average of more than one epoxy group per molecule, that is an aromatic liquid epoxy resin;
b) at least one liquid epoxy resin **A2** having an average of more than one epoxy group per molecule, that is selected from the group consisting of:
   - glycidyl ethers of difunctional saturated, branched or unbranched, cyclic or open-chain C₂-C₃₀ alcohols;
   - glycidyl ethers of tri- or polyfunctional, saturated, branched or unbranched, cyclic or open-chain alcohols; and
   - epoxidized di- or trifunctional polyether polyols;
c) at least one curing agent **B** for epoxy resins, where the curing agent **B** is a dihydrazide, preferably selected from the group consisting of aromatic dicarboxylic dihydrazide **B1** and aliphatic dicarboxylic dihydrazide **B2;** and
d) at least one at least one toughness improver **D** selected from the group consisting of terminally blocked polyurethane polymers **D1,** liquid rubbers **D2** and core-shell polymers **D3,** preferably a terminally blocked polyurethane polymer **D1.**
The weight ratio of the at least one liquid epoxy resin **A1** to the at least one liquid epoxy resin **A2 (A1/A2)** is from 0.25 - 5.0, preferably 0.33 - 3.0, more preferably 0.5 - 2.0, most preferably 0.75 - 1.5.

The term "polymer" in the present document refers on the one hand to a group of macromolecules that are chemically uniform but are different with respect to the degree of polymerization, the molecular weight and the chain length and are synthesized by a polyreaction (polymerization, polyaddition, polycondensation). On the other hand, this term also includes derivatives of such a group of macromolecules from polyreactions, i.e., compounds obtained by reactions, for example, addition or substitution of functional groups on predetermined molecules and which may be chemically uniform or chemically heterogeneous. This term additionally also includes so-called prepolymers, i.e., reactive oligomeric precursors whose functional groups are involved in the structure of the macromolecules.

Substance names that begin with "poly-" such as polyisocyanate, polyaldimine, polyamine, polyol, polymercaptans or polyglycidyl ethers in the present document refer to substances formally containing two or more functional groups, which also appear in their name, per molecule.

All industry standards mentioned in this document relate to the version valid at the date of first filing, unless specified otherwise.

The terms "mass" and "weight" are used synonymously in this document. Thus a "percentage by weight" (% by weight) is a percentage mass fraction which unless otherwise stated relates to the mass (the weight) of the total composition or, depending on the context, of the entire molecule.

The term "molecular weight" in the present document, in the context of polymers, refers to the average molecular weight Mₙ, commonly measured with gel permeation chromatography (GPC) against polystyrene standard.

Room temperature of the present documents is understood to be a temperature of 25°C.

The term "vehicle" in this document is understood to refer to any means of transport by water, by land and by air. Such means of transport include in particular ships, wheeled vehicles, such as automobiles, buses, cars, trucks and rail vehicles such as streetcars and railway vehicles.

The term "epoxide group" or "epoxy group" is understood to refer to the structural element

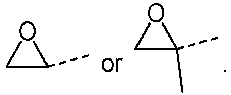

The dashed lines in the formulas in this document in each case represent the bond between the respective substituent and the respective molecular radical.

A "one-component" composition in the present document denotes a curable composition in which all the ingredients of the composition are mixed and stored together in the same container and which are stable in storage over a lengthy period of time at room temperature, so they undergo little or no significant change in their use properties or application properties due to storage, and such a composition cures following application by the action of heat.

The thermosetting one-component epoxy resin composition comprises a) at least one liquid epoxy resin **A1** having an average of more than one epoxy group per molecule, that is an aromatic liquid epoxy resin.

Preferred liquid epoxy resins **A1** have the formula (II) 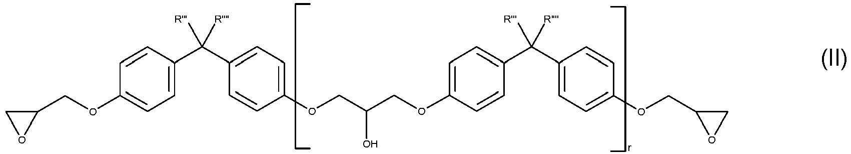 In this formula, the substituents R‴ and Rʺʺ are each independently H or CH₃. In addition, the index r has a value of 0 to 1. Preferably, r has a value of less than 0.2.

These are thus preferably diglycidyl ethers of bisphenol A (DGEBA), of bisphenol F and of bisphenol A/F (here, the designation "A/F" refers to a mixture of acetone with formaldehyde which is used as the reactant in the preparation thereof). Such liquid resins are available, for example, as Araldite^{®} GY 250, Araldite^{®} PY 304, Araldite^{®} GY 282 (Huntsman), or D.E.R. ^{™} 331, or D.E.R. ^{™} 330 (Olin), or Epikote 828 (Hexion).

Moreover, so-called novolacs are suitable epoxy resins **A1.** These have in particular the following formula: 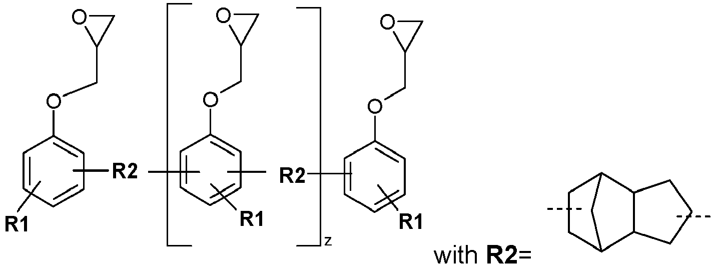 or CH₂, **R1** = H or methyl and z = 0 to 7.

In particular, they are phenol or cresol novolacs **(R2** = CH₂).

Such epoxy resins are commercially available under the trade names EPN or ECN as well as Tactix^{®} 556 from Huntsman or under the product line D.E.N.^{™} from Dow Chemical.

Particular preference is given to bisphenol A diglycidyl ether, bisphenol F diglycidyl ether or bisphenol A / F diglycidyl ether, in particular Araldite^{®} GY 240, Aralite^{®} GY 250, Araldite^{®} GY 281, Araldite^{®} GY 282, Araldite^{®} GY 285, Araldite^{®} PY 304 or Araldite^{®} PY 720 (all from Huntsman), or D.E.R.^{®} 330, D.E.R.^{®} 331, D.E.R.^{®} 332, D.E.R.^{®} 336, D.E.R.^{®} 351, D.E.R.^{®} 352, D.E.R.^{®} 354 or D.E.R.^{®} 356 (all from Olin), or novolak glycidyl ether.

Preferred is a novolak glycidyl ether that is derived from phenol-formaldehyde novolaks, which are also referred to as epoxy phenol novolac resins.

Such novolac glycidyl ethers are commercially available, for example from Olin, Huntsman, Momentive or Emerald Performance Materials. Preferred types are D.E.N.^{®} 431, D.E.N.^{®} 438 or D.E.N.^{®} 439 (from Olin), Araldite^{®} EPN 1179, Araldite^{®} EPN 1180, Araldite^{®} EPN 1182 or Araldite^{®} EPN 1183 (from Huntsman), Epon^{®} 154, Epon^{®} 160 or Epon^{®} 161 (from Momentive) or Epalloy^{®} 8250, Epalloy^{®} 8330 or Epalloy^{®} 8350 (from Emerald Performance Materials).

Preferably, the liquid epoxy resin **A1** is a liquid epoxy resin of the formula (II).

The thermosetting one-component epoxy resin composition comprises b) at least one liquid epoxy resin **A2** having an average of more than one epoxy group per molecule that is selected from the group consisting of:
- glycidyl ethers of difunctional saturated, branched or unbranched, cyclic or open-chain C₂-C₃₀ alcohols, in particular selected from the group consisting of ethylene glycol, butanediol, hexanediol, octanediol glycidyl ethers, cyclohexane dimethanol diglycidyl ether and neopentyl glycol diglycidyl ether;
- glycidyl ethers of tri- or polyfunctional, saturated, branched or unbranched, cyclic or open-chain alcohols, in particular selected from the group consisting of epoxidized castor oil, epoxidized trimethylolpropane, epoxidized pentaerythritol and epoxidized polyglycidyl ethers of aliphatic polyols such as sorbitol, glycerol or trimethylol propane;
- epoxidized di- or trifunctional polyether polyols, in particular selected from the group consisting of polyethylene glycol diglycidyl ether and polypropylene glycol diglycidyl ether.

More preferably, the liquid epoxy resin **A2** is selected from glycidyl ethers of difunctional saturated, branched or unbranched, cyclic or open-chain C₂-C₃₀ alcohols, in particular selected from the group consisting of ethylene glycol, butanediol, hexanediol, octanediol glycidyl ethers, cyclohexane dimethanol diglycidyl ether and neopentyl glycol diglycidyl ether. Most preferably the liquid epoxy resin **A2** is a glycidyl ether of hexanediol.

It is further preferred that the proportion of the sum of the liquid epoxy resins **A1** and **A2 (A1+A2)** is 5-20% by weight, preferably 7.5-15% by weight, more preferably 10-12.5% by weight, based on the total weight of the one-component epoxy resin composition.

The weight ratio of the at least one liquid epoxy resin **A1** to the at least one liquid epoxy resin **A2 (A1/A2)** is from 0.25 - 5.0, preferably 0.33 - 3.0, more preferably 0.5 - 2.0, most preferably 0.75 - 1.5.

A weight ratio of less than 0.33 leads to insufficient storage stability, especially at elevated temperatures. This can be seen, for example, in table 2 in the comparison of E1 with Ref1.

A weight ratio of more than 5.0 leads to insufficient elongation performance as well as to a too high viscosity. This can be seen, for example, in table 2 in the comparison of E1 with Ref2.

The above-mentioned preferred weight ratios are advantageous with respect to a good balance of high values for tensile strength, elongation at break and Shore A values as well as storage stability. This can be seen, for example, in table 3 in the comparison of E11 with Ref4, E10 and E12.

The composition of the invention also contains at least one curing agent **B** for epoxy resins. The curing agent **B** is a dihydrazide, which is preferably selected from the group consisting of aromatic dicarboxylic dihydrazide **B1** and aliphatic dicarboxylic dihydrazide **B2.**

If the curing agent **B** is an aromatic dicarboxylic dihydrazide **B1,** it is preferably selected from the group consisting of isophthalic dihydrazide and/or terephthalic dihydrazide, preferably isophthalic dihydrazide.

Suitable dihydrazides are commercially available, for example, from Otsuka Chemical Co., Ltd under the Ajicure^{®} trade name (from Ajinomoto Fine-TechnoCo., Inc.) and under the Technicure^{®} trade name (from A&C Catalysts).

Preferably, the curing agent **B** is an aliphatic dicarboxylic dihydrazide **B2,** preferably selected from the group consisting of glutaric dihydrazide, adipic dihydrazide, pimelic dihydrazide, 8,12-eicosadienedioic acid 1,20-dihydrazide and 4-isopropyl-2,5-dioxoimidazolidine-1,3-di(propionohydrazide).

Preference is given to adipic dihydrazide, 8,12-eicosadienedioic acid 1,20-dihydrazide (UDH) and 4-isopropyl-2,5-dioxoimidazolidine-1,3-di(propionohydrazide) (VDH). Most preferred is adipic dihydrazide.

Suitable dihydrazides are commercially available, for example, from Otsuka Chemical Co., Ltd under the Ajicure^{®} trade name (from Ajinomoto Fine-TechnoCo., Inc.) and under the Technicure^{®} trade name (from A&C Catalysts)

Preferably, in the thermosetting one-component epoxy resin composition, the ratio of the proportion of the sum of the epoxy groups of the liquid epoxy resins **A1** and **A2** in mol / proportion of curing agent **B** in mol **((A1+A2)/B)** is 3-8, preferably 4-7, more preferably 5-7, most preferably 5.5-6.5.

A ratio of more than 8 is disadvantageous with respect to lower values for Shore A values. A ratio of less than 3 is disadvantageous with respect to lower values for elongation at break and storage stability.

Preferably, the thermosetting one-component epoxy resin composition additionally contains at least one accelerator **C** for epoxy resins. This is advantageous especially with respect to curing at lower temperatures.

Preferably, the accelerator **C** for epoxy resins is selected from the list consisting of substituted ureas, imidazoles, imidazolines and blocked amines, especially substituted ureas.

This preferably comprises substituted ureas of the formula (III) 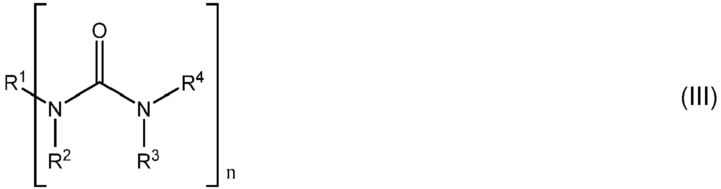 in which R¹ and R² are independently hydrogen atoms or monovalent alkyl radicals which have 1 to 10 carbon atoms and optionally also comprise oxygen atoms, nitrogen atoms and/or aromatic units or together form a divalent alkyl radical having 1 to 10 carbon atoms, and which may additionally comprise oxygen atoms, nitrogen atoms or aromatic units; R³ and R⁴ are independently hydrogen atoms or monovalent alkyl radicals which have 1 to 10 carbon atoms and optionally also comprise oxygen atoms or nitrogen atoms; and the index n has a value of 1 or 2.

The substituted urea of the formula (III) is preferably selected from the group consisting of p-chlorophenyl-N,N-dimethylurea (monuron), 3-phenyl-1,1-dimethylurea (fenuron), 3,4-dichlorophenyl-N,N-dimethylurea (diuron), N-methylurea, N,N-dimethylurea, N,N'-dimethylurea, N,N,N'-trimethylurea, N,N,N',N'-tetramethylurea and derivatives thereof, where some or all methyl groups are instead ethyl groups.

Preferably, R¹ and R² are independently hydrogen atoms or monovalent linear or branched alkyl radicals which have 1 to 10, preferably 1 to 5, more preferably 1 to 4, carbon atoms and optionally together constitute a divalent alkyl radical that forms a ring structure with the adjacent nitrogen atom, and/or R³ and R⁴ independently represent hydrogen atoms or monovalent linear or branched alkyl radicals which have 1 to 10, preferably 1 to 5, more preferably 1 to 4, carbon atoms and optionally together constitute a divalent alkyl radical that forms a ring structure with the adjacent nitrogen atom.

Very particularly preferred substituted ureas of the formula (III) are those in which R¹ and R² in formula (III) are both hydrogen atoms and/or in which R³ and R⁴ are both ethyl or methyl groups, preferably methyl groups.

Further preferred urea derivatives of the formula (III) include those in which R¹, R², R³ and R⁴ in formula (III) all represent ethyl or methyl, preferably methyl groups, or in which R¹, R² and R³ represent ethyl or methyl, preferably methyl, and R⁴ is a hydrogen atom, or where R¹ and R⁴ both represent hydrogen atoms, and R² and R³ both represent ethyl or methyl groups, preferably methyl groups.

Suitable urea derivatives are commercially available, for example, under the Dyhard ^{®} trade name (from AlzChem Group AG), under the Omicure^{®} trade name (from CVC Thermoset Specialties), under the Amicure^{®} trade name (from Evonik) and from Sigma Aldrich.

The accelerator **C** especially has a molecule of less than 1000 g/mol, especially between 80 and 800 g/mol. If the molecular weight is greater, the accelerating effect is reduced and the necessary use amount is significantly higher, which can in turn lead to poor mechanical properties.

The amount of the accelerator **C** is advantageously 0.005-1.0% by weight, especially 0.01-0.5% by weight, preferably 0.05-0.25% by weight, based on the weight of the sum of the liquid epoxy resins **A1** and **A2.**

The ratio of the proportion of accelerator **C** in grams per mole of the sum of the epoxy groups of the liquid epoxy resins **A1** and **A2 ((A1+A2)/C)** is preferably 0.01-0.5 g/mol of epoxy groups, especially 0.05-0.3 g/mol of epoxy groups, more preferably 0.075-0.2 g/mol of epoxy groups, most preferably 0.08-0.15 g/mol of epoxy groups.

The one-component thermosetting epoxy resin composition comprises at least one toughness improver **D.** The toughness improvers **D** may be solid or liquid, preferably liquid.

The toughness improver **D** is selected from the group consisting of terminally blocked polyurethane polymers **D1,** liquid rubbers **D2** and core-shell polymers **D3.** The toughness improver **D** is preferably selected from the group consisting of terminally blocked polyurethane polymers **D1** and liquid rubbers **D2.** Particular preference is given to a terminally blocked polyurethane polymer **D1.**

It is preferably a terminally blocked polyurethane polymer **D1** blocked with a blocking group that is eliminated at a temperature above 100°C.

Preferred blocking groups are especially firstly phenols or bisphenols. Preferred examples of such phenols and bisphenols are especially phenol, cresol, resorcinol, catechol, 4-Hydroxyanisole (HQMME), cardanol (3-pentadecenylphenol (from cashewnutshell oil)), nonylphenol, phenols that have been reacted with styrene or dicyclopentadiene, bisphenol A, bisphenol F and 2,2'-diallylbisphenol A.

The terminally blocked polyurethane prepolymer is prepared from a linear or branched polyurethane prepolymer terminated by isocyanate groups with one or more isocyanate-reactive compounds. If two or more such isocyanate-reactive compounds are used, the reaction can be effected sequentially or with a mixture of these compounds.

The reaction is preferably effected in such a way that the one or more isocyanate-reactive compounds are used stoichiometrically or in a stoichiometric excess in order to ensure that all NCO groups have been converted.

The polyurethane prepolymer with isocyanate end groups can be prepared from at least one diisocyanate or triisocyanate and from a polymer **Q_{PM}** having terminal amino, thiol or hydroxyl groups and/or from an optionally substituted polyphenol **Q_{PP}**, preferably polymer **Q_{PM}** having terminal amino, thiol or hydroxyl groups.

Suitable diisocyanates are aliphatic, cycloaliphatic, aromatic or araliphatic diisocyanates, especially commercial products such as methylene diphenyl diisocyanate (MDI), hexamethylene diisocyanate (HDI), toluene diisocyanate (TDI), toluidine diisocyanate (TODI), isophorone diisocyanate (IPDI), trimethylhexamethylene diisocyanate (TMDI), 2,5- or 2,6-bis(isocyanatomethyl)bicyclo[2.2.1]heptane, naphthalene 1,5-diisocyanate (NDI), dicyclohexylmethyl diisocyanate (H₁₂MDI), p-phenylene diisocyanate (PPDI), m-tetramethylxylylene diisocyanate (TMXDI), etc. and dimers thereof. Preference is given to HDI, IPDI, MDI or TDI.

Suitable triisocyanates are trimers or biurets of aliphatic, cycloaliphatic, aromatic or araliphatic diisocyanates, especially the isocyanurates and biurets of the diisocyanates described in the previous paragraph. It is of course also possible to use suitable mixtures of di- or triisocyanates.

Especially suitable polymers **Q_{PM}** having terminal amino, thiol or hydroxyl groups are polymers **Q_{PM}** having two or three terminal amino, thiol or hydroxyl groups.

The polymers **Q_{PM}** advantageously have an equivalent weight of 300-6000, especially of 600-4000, preferably of 700-2200, g/equivalent of NCO-reactive groups.

Preferred polymers **Q_{PM}** are polyols having average molecular weights between 600 and 6000 daltons, selected from the group consisting of polyethylene glycols, polypropylene glycols, polyethylene glycol-polypropylene glycol block polymers, polybutylene glycols, hydroxyl-terminated polybutadienes, hydroxyl-terminated butadiene-acrylonitrile copolymers and mixtures thereof.

Especially preferred polymers **Q_{PM}** are α-ω-dihydroxy polyalkylene glycols having C₂-C₆-alkylene groups or having mixed C₂-C₆-alkylene groups, terminated by amino, thiol or, preferably, hydroxyl groups. Particular preference is given to polypropylene glycols or polybutylene glycols. Particular preference is further given to hydroxyl group-terminated polyoxybutylenes.

Especially suitable polyphenols **Q_{PP}** are bis-, tris- and tetraphenols. This is understood to mean not just straight phenols but optionally also substituted phenols. The nature of the substitution may be very varied. More particularly, this is understood to mean substitution directly on the aromatic ring to which the phenolic OH group is bonded. Phenols are additionally understood to mean not just monocyclic aromatics but also polycyclic or fused aromatics or heteroaromatics that have the phenolic OH group directly on the aromatic or heteroaromatic system.

In a preferred embodiment, the polyurethane prepolymer is prepared from at least one diisocyanate or triisocyanate and from a polymer **Q_{PM}** having terminal amino, thiol or hydroxyl groups. The polyurethane prepolymer is prepared in a manner known to the person skilled in the art of polyurethane, especially by using the diisocyanate or triisocyanate in a stoichiometric excess in relation to the amino, thiol or hydroxyl groups of the polymer **Q_{PM}**.

The polyurethane prepolymer having isocyanate end groups preferably has elastic character. It preferably exhibits a glass transition temperature Tg of less than 0°C.

The toughness improver D may be a liquid rubber **D2.** This may be, for example, a carboxy- or epoxy-terminated polymer.

In a first embodiment, this liquid rubber may be a carboxy- or epoxy-terminated acrylonitrile/butadiene copolymer or derivative thereof. Such liquid rubbers are commercially available, for example, under the Hypro / Hypox^{®} CTBN and CTBNX and ETBN name from Emerald Performance Materials. Suitable derivatives are especially elastomer-modified prepolymers having epoxy groups, as sold commercially under the Polydis^{®} product line, especially from the Polydis^{®} 36.. product line, by Struktol^{®} (Schill+Seilacher Gruppe, Germany) or under the Albipox product line (Evonik, Germany).

In a second embodiment, this liquid rubber may be a polyacrylate liquid rubber which is fully miscible with liquid epoxy resins and separates to form microdroplets only in the course of curing of the epoxy resin matrix. Such polyacrylate liquid rubbers are available, for example, under the 20208-XPA name from Dow.

It is of course also possible to use mixtures of liquid rubbers, especially mixtures of carboxy- or epoxy-terminated acrylonitrile/butadiene copolymers or derivatives thereof.

The toughness improver **D**, in a third embodiment, may be a core-shell polymer **D3.** Core-shell polymers consist of an elastic core polymer and a rigid shell polymer. Particularly suitable core-shell polymers consist of a core of elastic acrylate or butadiene polymer encased by a rigid shell of a rigid thermoplastic polymer. This core-shell structure either forms spontaneously as a result of separation of a block copolymer or is defined by the conduct of the polymerization as a latex or suspension polymerization with subsequent grafting. Preferred core-shell polymers are what are called MBS polymers, which are commercially available under the Clearstrength^{™} trade name from Arkema, Paraloid^{™} from Dow or F-351^{™} from Zeon.

Preferably, the proportion of toughness improver **D**, especially of terminally blocked polyurethane polymer **D1,** is 15-45% by weight, especially 20-40% by weight, especially 22.5-35% by weight, especially 25-35% by weight, more preferably 27.5-32.5% by weight, based on the total weight of the thermosetting one-component epoxy resin composition.

This is advantageous in that this gives higher values of elongation. This can be seen, for example, in table 2 in the comparison of E6 with E7.

It is further preferred if the weight ratio of the sum of the at least one liquid epoxy resin **A1** and the at least one liquid epoxy resin **A2** to the at least one toughness improver **D ((A1+A2)/D)** is from 0.25 - 0.6, preferably 0.3 - 0.5, more preferably 0.35 - 0.55.

Such a weight ratio is advantageous with respect to higher values of elongation. This can be seen, for example, in table 2 in the comparison of E6 with E7.

Preferably, the thermosetting one-component epoxy resin composition additionally includes at least one plasticizer **PL.**

Preferably, the at least one plasticizer **PL** is selected from the group consisting of phthalic acid diesters (also known as "phthalates"), especially dialkyl phthalates, especially preferred di-C6-C13-alkyl phthalate and alkyl benzyl phthalates; dialkyl terephthalates; aliphatic carboxylic diesters; polyester-type polymers; adipic polyesters; phosphate esters, preferably triaryl and alkylaryl phosphates; trimellitate esters; benzoate and dibenzoate esters; citrate esters and alkyl sulphonic esters of phenol. More preferably, the at least one plasticizer **PL** is selected from trimellitate esters.

Specific examples of preferred plasticizers are selected from the group consisting of dibutyl phthalate (DBP), diisobutyl phalate (DIBP), di-isononyl phthalate (DINP), diallyl phthalate (DAP), di-2-ethylhexyl-phthalate (DEHP or DOP), diisodecyl phthalate (DIDP), di(2-propyl heptyl) phthalate (DPHP), di-2-ethylhexyl adipate (DOA), di(tridecyl)phthalate (DTDP), butyl benzyl phthalate (BBP), dihexyl phthalate, tri-2-ethyl hexyl trimellitate (TOTM), condensation products of glycols such as 1,3 buylene glycol with dibasic organic acids such as adipic acid, and dipropylene glycol dibenzoate, most preferably tri-2-ethyl hexyl trimellitate (TOTM).

It is further preferred if the weight ratio of the sum of the at least one liquid epoxy resin A1 and the at least one liquid epoxy resin **A2** to the at least one plasticizer **PL ((A1+A2)/PL)** is from 1 - 10, preferably 1.25 - 5, more preferably 1.5 - 3, even more preferably 1.75 - 2.5, most preferably 1.8 - 2.2.

Such a weight ratio is advantageous with respect to higher values of elongation and lower viscosity. This can be seen, for example, in table 2 in the comparison of E6 with E1 - E5.

Advantageously, the total proportion of at least one plasticizer **PL** is 2 - 10 % by weight, preferably 4 - 8 % by weight, more preferably 5 - 7 % by weight, most preferably 5.5 - 6 % by weight, based on the total weight of the thermosetting one-component epoxy resin composition.

In a further preferred if the thermosetting one-component epoxy resin composition additionally comprises at least one filler **F.** Preference is given here to mica, talc, kaolin, wollastonite, feldspar, titanium oxide, syenite, chlorite, bentonite, montmorillonite, calcium carbonate (precipitated or ground), dolomite, quartz, silicas (fused or precipitated), cristobalite, calcium oxide, aluminum hydroxide, magnesium oxide, hollow ceramic beads, hollow glass beads, hollow organic beads, glass beads, color pigments. Particular preference is given to fillers selected from the group consisting of calcium carbonate, calcium oxide, talc, titanium oxide, and fumed silicas.

Advantageously, the total proportion of the overall filler **F** is 35-60% by weight preferably 45-55% by weight, more preferably 47.5-52.5% by weight, based on the total weight of the thermosetting one-component epoxy resin composition.

Such a preferred range is advantageous with respect to higher values of elongation. This can be seen, for example, in table 2 in the comparison of E6 with E8 and E9.

In a further preferred embodiment, the thermosetting one-component epoxy resin composition comprises less than 3 wt.-%, based on the total weight of the one-component epoxy resin composition, of at least one epoxy-bearing reactive diluent G containing only one epoxy group. Such reactive diluents are known to the person skilled in the art. Preferred examples of epoxy-bearing reactive diluents are:
- glycidyl ethers of monofunctional, saturated or unsaturated, branched or unbranched, cyclic or open-chain, C₄-C₃₀ alcohols, e.g. butanol glycidyl ether, hexanol glycidyl ether, 2-ethylhexanol glycidyl ether, allyl glycidyl ether, tetrahydrofurfuryl and furfuryl glycidyl ether, trimethoxysilyl glycidyl ether, and the like;
- glycidyl ethers of phenol compounds with only one OH-group, such as phenyl glycidyl ether, cresyl glycidyl ether, p-tert-butylphenyl glycidyl ether, nonylphenol glycidyl ether and 3-n-pentadecenyl glycidyl ether (from cashewnutshell oil).
Particular preference is given to phenyl glycidyl ether, cresyl glycidyl ether, p-tert-butylphenyl glycidyl ether, nonylphenol glycidyl ether and 3-n-pentadecenyl glycidyl ether.

The amount of the at least one epoxy-bearing reactive diluent **G** containing only one epoxy group is preferably less than 2% by weight, especially less than 1% by weight, preferably less than 0.5% by weight, more preferably less than 0.3% by weight, most preferably less than 0.1% by weight, based on the total weight of the epoxy resin composition. More preferably, the thermosetting one-component epoxy resin composition does not include any such reactive diluent **G.**

This is advantageous with respect to bubble formation at curing temperatures of 210 °C or more. This is shown, for example, in the comparison of Ref3 with Ref1-2 and E1-E9. Such bubble formation leads to a significant reduction in the mechanical properties of the cured material.

It is advantageous when the epoxy resin composition of the invention has a viscosity at 23°C of 150 - 900 Pa*s, especially 200 - 800 Pa*s, preferably 200 - 400 Pa*s, more preferably 250 - 350 Pa*s, especially measured with a rheometer in oscillation using a plate-plate geometry with the following parameters: 10 Hz, measurement gap 1 mm, plate-plate diameter 25 mm, 0.01-10% deformation, determination of A4 complex viscosity h* determined at 10% deformation. This is advantageous in that this assures good applicability.

The thermosetting one-component epoxy resin composition is prepared and stored in the absence of moisture. It is stable in storage, i.e., it can be stored for a period of several months or up to a year or even more in the absence of moisture in a suitable package or configuration, for example, a drum, a bag or a cartridge without any changes in application properties or in its properties after curing of an extent that would be relevant for use thereof. The storage stability is usually determined by measuring the viscosity.

The thermosetting one-component epoxy resin composition is characterized by extraordinarily good storage stability. The change in viscosity of the composition in an aluminum cartridge with an airtight seal after storage for 7 days at 60°C in a circulating air oven can be used as a measure of long-term storage stability at room temperature. Experience has shown that at most a doubling of viscosity, i.e., an increase of max. 150%, is admissible for reliable use of the composition as a sealing compound. It has been found that the compositions meet this requirement excellently; changes in viscosity amounting to less than 120 % and in some cases even less than 100 % can be achieved.

Very few bubbles or none at all are formed during the curing of the thermosetting one-component epoxy resin compositions according to the invention at 210 °C.

Therefore, they have excellent mechanical properties and an optimal visual aspect. This is especially important because the CDC paint goes above the surface of the composition if used as a sealing compound and so the sealing compound surface can be seen through the CDC paint and/or the colored paint subsequently placed over it.

Furthermore, the compositions are largely elastic after being cured by heat. This is especially advantageous in the case of seals that are exposed to impacts or movements during use.

This combination of advantageous properties makes it possible for the thermosetting one-component epoxy resin compositions to be usable in particular as sealing compounds in autobody work, in particular in the engine space or for doors, trunk lids, tailgates or hoods. In particular they may also be used as the sealing compound in flange fold seals, such as those disclosed in WO 2008/077918 A1.

In another aspect of the present invention, a method for sealing which comprises the following steps, is disclosed:
i) Applying a thermosetting one-component epoxy resin composition, such as that described above, to a substrate **(S);**
ii) Heating the thermosetting one-component epoxy resin composition to a temperature above 120°C, in particular between 160°C and 220°C, to form a cured thermosetting one-component epoxy resin composition.

Materials suitable for substrate **(S)** include in particular metals, in particular those metals which are used in the construction of vehicle bodies of automobiles in particular. These include in particular steels, especially electrolytically galvanized, flame galvanized, oiled steel, Bonazinc-coated steel and subsequently phosphatized steel, or aluminum, in particular in the variants that typically occur in automotive engineering. These include steel plates or aluminum plates in particular.

The application, i.e., the deposition, is preferably performed automatically and in particular in the form of a bead. However, the thermosetting one-component epoxy resin composition may also be sprayed on. Other application methods such as swirl application, flat-stream spraying, mini-flat stream spraying and thin-stream spraying at speeds of >200 mm/s or the like are also conceivable. In addition, a manual application or manual reworking of the applied thermosetting one-component epoxy resin composition by spatula or paintbrush is also possible.

Thus, in another aspect, the present invention also relates to a coated substrate obtained by applying a thermosetting one-component epoxy resin composition such as that described in detail above to the surface of a substrate.

In an especially preferred embodiment, the thermosetting one-component epoxy resin composition is applied to an oiled steel plate. The advantage of the composition that it adheres well to such a substrate and cures with very few blasters.

It is preferable for a step ia) to be performed between step i) and step ii):
ia) Applying a paint, in particular a CDC paint, to the thermosetting one-component epoxy resin composition.

Those skilled in the art of automotive engineering are familiar with the concept of a CDC paint, which refers to a paint applied to sheet metal in a CDC bath (CDC = cathodic dip coating).

Step ii) is preferably performed in a CDC oven.

By heating the thermosetting one-component epoxy resin composition, curing takes place, so that the thermosetting one-component epoxy resin composition receives its final strength.

Preferably, in step ii), the composition is heated to a temperature of 100-220°C, especially of 120-200°C, preferably between 130 and 150°C, more preferably between 130 and 140°C, and the composition is left at the aforementioned temperature for 10 min - 6 h, 10 min - 2 h, 10 min - 60 min, 10 min - 30 min, 10 min - 20 min, more preferably 10 min - 15 min.

The thermosetting one-component epoxy resin composition is suitable for sealing gaps in particular.

It is thus preferable for the thermosetting one-component epoxy resin composition to be applied in or to a gap in step i), said gap being bordered by two surfaces of the substrate **(S)** and a second substrate **(S2),** the second substrate **(S2)** being made of the same material as the substrate **(S)** or a different material.

Thus, a sealed article is obtained by the method described above.

More preferably, the compositions of the invention have the following properties:

### After curing for 30 minutes at 180°C:

- TS, measured as described in the experimental, of 2 - 6 MPa, preferably 3 - 5 MPa.
- EB, measured as described in the experimental, of ≥ 80%, preferably ≥ 100 %.
- Shore A, measured as described in the experimental, of 40 - 90, preferably 60 - 90.

### Examples

Some examples which further illustrate the invention, but which are not intended to restrict the scope of the invention in any way, are cited below.

### Preparation of a toughness improver ("D-1")

150 g of poly-THF 2000 (OH number 57 mg/g KOH) and 150 of Liquiflex H (OH number 46 mg/g KOH) were dried under vacuum at 105°C for 30 minutes. Once the temperature had been reduced to 90°C, 61.5 g of IPDI and 0.14 g of dibutyltin dilaurate were added. The reaction was carried out under vacuum at 90°C until the NCO content was constant at 3.10% after 2.0 h (calculated NCO content: 3.15%). Subsequently, 96.1 g of cardanol were added as blocking agent. Stirring was continued at 105°C under vacuum until it was no longer possible to detect any free NCO. The product was used as such as toughness improver **D-1.**

| | |
|---|---|
| A1 | Liquid aromatic epoxy resin, D.E.R. 331 (bisphenol A diglycidyl ether), DOW |
| A2 | Liquid aliphatic epoxy resin, diglycidylether of 1.6-hexanediol, Araldite DY-H, DOW |
| ME | Tert-Butylphenyl-glycidylether, Polypox R7, reactive diluent |
| B2 | Adipic dihydrazide (ADH), CAS: 1071-93-8, Otsuka ADH/S (median particle size D50 of 4-15 µm), Otsuka Chemical Co., Mw: 174.20 g/mol |
| C1 | N,N-dimethylurea, Mw: 88.11 g/mol, Sigma Aldrich |
| AP | Epoxysilane, adhesion promotor |
| PL | TOTM, Tris(2-ethylhexyl) trimellitate, CAS: 3319-31-1, plasticizer |
| F1 | Calcium carbonate |
| F2 | Pyrogenic silica |
| F3 | Calcium oxide |
| F4 | Talkum |
| F5 | TiO₂ |
| | Poly-THF 2000 (difunctional polybutylene glycol) |
| | (OH equivalent weight = about 1000 g/OH equivalent), BASF |
| | Liquiflex H (hydroxyl-terminated polybutadiene) (OH equivalent weight = about 1230 g/OH equivalent), Krahn |
| | Isophorone diisocyanate (= *"IPDI*"), Evonik |
| | Cardolite NC-700 (cardanol, meta-substituted alkenylmonophenol), Cardolite |

Raw materials used.

### Production of the compositions

The reference compositions Ref1-Ref4 and the inventive compositions E1 to E12 were produced according to the compositions in table 2 and table 3. The stated amounts in table 2 and table 3 are in parts by weight. The ratio of the proportion of the sum of the epoxy groups of the liquid epoxy resins **A1** and **A2** in mol / proportion of curing agent **B** in mol **((A1+A2)/B)** is 6. The ratio of the proportion of accelerator **C** in grams per mole of the sum of the epoxy groups of the liquid epoxy resins **A1** and **A2 ((A1+A2)/C)** is 0.1.

### Test methods:

### Bubble formation (BF)

The mixed compositions were applied into a silicone mold to form a layer having a thickness of 2 mm and were cured at 210 °C for 30 minutes. After curing, the test specimens were analyzed for bubble formation. If bubble formation occurred, the sample was rated "yes", if no bubble formation occurred the sample was rated "no".

### Tensile Strength (TS) and Elongation at Break (EB) (DIN EN ISO 527)

These mechanical properties were determined by using dumbbell-shaped bars (specimen type 5A of DIN EN ISO 527) having a thickness of 2 mm and a length of 750 mm. After curing at 180 °C for 30 minutes, the test specimens were measured under standard conditions at a pulling speed 200 mm/min (TS, EB), respectively. The tensile strength and elongation at break were determined according to DIN EN ISO 527.

### Shore A (Shore A) (DIN 53505)

Shore A hardness was measured according to DIN 53505 with a specimen of 6 mm thickness, which was cured for 30min at 180 °C.

### Viscosity/storage stability of compositions

Viscosity measurements of the compositions were effected 1 d after production on an Anton Paar MCR 101 rheometer by oscillation using a plate-plate geometry at a temperature of 23°C with the following parameters: 10 Hz, measurement gap 1 mm, plate-plate diameter 25 mm, 0.01-10% deformation, determination of A4 complex viscosity h* determined at 10% deformation. The measurement is displayed in table 2 and table 3 under "Visco initial 23°C".

For assessment of the storage stability of the adhesives, the viscosity measurement was repeated after storage at the specified temperature for a specified time in weeks (W) or month (M), and the percentage rise in viscosity that results after the storage was ascertained. The measured viscosity in Pa*s measured at a temperature of 23°C after storage for 1 week at 50°C and 60°C is displayed in table 2 under "Visco 1W 50°C" and "Visco 1W 60°C" respectively. The measured viscosity in Pa*s measured at a temperature of 23°C after storage for 1 month at 23°C is displayed in table 3 under "Visco 1M 23°C". The value between parentheses shows the percentage rise in viscosity.

**Table 2, n.d. = not determined**

| | **E1** | **Ref1** | **Ref2** | **Ref3** | **E2** | **E3** | **E4** | **E5** | **E6** | **E7** | **E8** | **E9** |
|---|---|---|---|---|---|---|---|---|---|---|---|---|
| A1 | 6.12 | - | 12.26 | 6.12 | 6.04 | 5.97 | 5.90 | 5.83 | 5.76 | 6.12 | 5.39 | 5.12 |
| A2 | 6.12 | 12.21 | - | - | 6.04 | 5.97 | 5.90 | 5.83 | 5.76 | 6.12 | 5.39 | 5.12 |
| ME | | | | 6.12 | | | | | | | | |
| D1 | 30.58 | 30.53 | 30.64 | 30.64 | 30.21 | 29.85 | 29.50 | 29.16 | 28.82 | 24.47 | 26.96 | 25.58 |
| B2 | 2.10 | 2.29 | 1.92 | 1.92 | 2.08 | 2.05 | 2.03 | 2.01 | 1.98 | 2.10 | 1.85 | 1.76 |
| C1 | 0.01 | 0.01 | 0.01 | 0.01 | 0.01 | 0.01 | 0.01 | 0.01 | 0.01 | 0.01 | 0.01 | 0.01 |
| AP | 1.22 | 1.22 | 1.23 | 1.23 | 1.21 | 1.19 | 1.18 | 1.17 | 1.15 | 1.22 | 1.08 | 1.02 |
| PL | - | - | - | - | 1.21 | 2.39 | 3.54 | 4.66 | 5.76 | 6.12 | 5.39 | 5.12 |
| F1 | 35.50 | 35.43 | 35.55 | 35.55 | 35.06 | 34.67 | 34.24 | 33.83 | 33.46 | 35.49 | 37.77 | 40.92 |
| F2 | 3.67 | 3.66 | 3.68 | 3.68 | 3.63 | 3.58 | 3.54 | 3.50 | 3.46 | 3.67 | 3.23 | 3.07 |
| F3 | 7.34 | 7.33 | 7.35 | 7.35 | 7.25 | 7.16 | 7.08 | 7.00 | 6.92 | 7.34 | 6.47 | 6.14 |
| F4 | 3.67 | 3.66 | 3.68 | 3.68 | 3.63 | 3.58 | 3.54 | 3.50 | 3.46 | 3.67 | 3.23 | 3.07 |
| F5 | 3.67 | 3.66 | 3.68 | 3.68 | 3.63 | 3.58 | 3.54 | 3.50 | 3.46 | 3.67 | 3.23 | 3.07 |
| **Total (wt.-%):** | 100 | 100 | 100 | 100 | 100 | 100 | 100 | 100 | 100 | 100 | 100 | 100 |
| Ratio ((A1+A2)/PL) | - | - | - | - | 10.0 | 5.0 | 3.3 | 2.5 | 2.0 | 2.0 | 2.0 | 2.0 |
| Ratio ((A1+A2)/D) | 0.4 | - | - | - | 0.4 | 0.4 | 0.4 | 0.4 | 0.4 | 0.5 | 0.4 | 0.4 |
| BF 210°C | no | no | no | yes | no | no | no | no | no | no | no | no |
| TS 180°C | 4.8 | 3.7 | 7.2 | n.d. | 4.8 | 4.7 | 4.3 | 4.4 | 4.1 | 5.0 | 4.2 | 4.1 |
| EB 180°C | 102.4 | 107.1 | 94.7 | n.d. | 126 | 127 | 121 | 145 | 118.8 | 93.5 | 107 | 91 |
| Shore A | 78 | 72 | 64 | n.d. | n.d. | n.d. | n.d. | n.d. | 73 | n.d. | n.d. | n.d. |
| Visco initial 23°C | 454 | 301 | 957 | n.d. | 455 | 382 | 360 | 317 | 256 | 264 | 738 +56% | 780 +36% |
| Visco 1W 50°C | 582 | 449 | 1157 | n.d. | 506 | 461 | 423 | 374 | 338 | 312 | 738 | 780 |
| | +28% | +49% | +21% | | +11% | +21% | +17% | +18% | +32% | +18% | +56% | +36% |
| Visco 1W 60°C | 697 +53% | 1155 +283% | 1580 +65% | n.d. | n.d. | n.d. | n.d. | n.d. | 488 +91% | 511 +94% | 609 +68% | 581 +81% |

**Table 3**

| | **Ref4** | **E10** | **E11** | **E12** |
|---|---|---|---|---|
| A1 | 13.12 | 9.83 | 6.55 | 3.25 |
| A2 | - | 3.28 | 6.55 | 9.81 |
| D1 | 40.38 | 40.34 | 40.3 | 40.26 |
| B2 | 2.06 | 2.16 | 2.25 | 2.35 |
| C1 | 0.02 | 0.02 | 0.02 | 0.02 |
| F1 | 29.27 | 29.22 | 29.18 | 29.16 |
| F2 | 3.03 | 3.03 | 3.03 | 3.03 |
| F3 | 6.06 | 6.06 | 6.06 | 6.06 |
| F4 | 3.03 | 3.03 | 3.03 | 3.03 |
| F5 | 3.03 | 3.03 | 3.03 | 3.03 |
| **Total (wt.-%):** | 100 | 100 | 100 | 100 |
| Ratio (A1/A2) | - | 3.00 | 1.00 | 0.33 |
| Ratio ((A1+A2)/D) | 0.33 | 0.33 | 0.33 | 0.33 |
| TS 180°C | 4.83 | 5.31 | 4.91 | 4.16 |
| EB 180°C | 154.4 | 197 | 224.1 | 229.2 |
| Shore A | 66 | 62 | 61 | 55 |
| Visco initial 23°C | 1148 | 680 | 453 | 322 |
| Visco 1M 23°C | 1361 (19%) | 801 (18%) | 511 (13%) | 392 (21%) |

## Claims

1. A thermosetting one-component epoxy resin composition comprising
a) at least one liquid epoxy resin **A1** having an average of more than one epoxy group per molecule, that is an aromatic liquid epoxy resin;
b) at least one liquid epoxy resin **A2** having an average of more than one epoxy group per molecule, that is selected from the group consisting of:
- glycidyl ethers of difunctional saturated, branched or unbranched, cyclic or open-chain C₂-C₃₀ alcohols;
- glycidyl ethers of tri- or polyfunctional, saturated, branched or unbranched, cyclic or open-chain alcohols; and
- epoxidized di- or trifunctional polyether polyols;
c) at least one curing agent **B** for epoxy resins, where the curing agent **B** is a dihydrazide, preferably selected from the group consisting of aromatic dicarboxylic dihydrazide **B1** and aliphatic dicarboxylic dihydrazide **B2;** and
d) at least one at least one toughness improver **D** selected from the group consisting of terminally blocked polyurethane polymers **D1,** liquid rubbers **D2** and core-shell polymers **D3,** preferably a terminally blocked polyurethane polymer **D1,**
wherein the weight ratio of the at least one liquid epoxy resin **A1** to the at least one liquid epoxy resin **A2 (A1/A2)** is from 0.25 - 5.0, preferably 0.33 - 3.0, more preferably 0.5 - 2.0, most preferably 0.75 - 1.5.

2. The thermosetting one-component epoxy resin composition as claimed in claim 1, **characterized in that** the curing agent **B** is an aliphatic dicarboxylic dihydrazide **B2,** preferably selected from the group consisting of glutaric dihydrazide, adipic dihydrazide, pimelic dihydrazide, 8,12-eicosadienedioic acid 1,20-dihydrazide and 4-isopropyl-2,5-dioxoimidazolidine-1,3-di(propionohydrazide), especially adipic dihydrazide.

3. The thermosetting one-component epoxy resin composition as claimed in any of the preceding claims, **characterized in that** the at least one liquid epoxy resin **A1** has the formula (II) 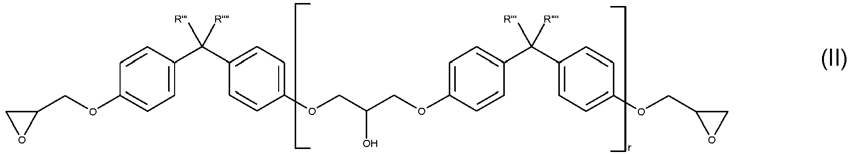 wherein the substituents R‴ and R"" are each independently H or CH₃, the index r has a value of 0 to 1, preferably, r has a value of less than 0.2.

4. The thermosetting one-component epoxy resin composition as claimed in any of the preceding claims, **characterized in that** liquid epoxy resin **A2** is selected from glycidyl ethers of difunctional saturated, branched or unbranched, cyclic or open-chain C₂-C₃₀ alcohols, in particular selected from the group consisting of ethylene glycol, butanediol, hexanediol, octanediol glycidyl ethers, cyclohexane dimethanol diglycidyl ether and neopentyl glycol diglycidyl ether, most preferably the liquid epoxy resin **A2** is a glycidyl ether of hexanediol.

5. The thermosetting one-component epoxy resin composition as claimed in any of the preceding claims, **characterized in that** the thermosetting one-component epoxy resin composition additionally includes at least one accelerator **C** selected from the list consisting of substituted ureas, imidazoles, imidazolines and blocked amines, especially substituted ureas.

6. The thermosetting one-component epoxy resin composition as claimed in any of the preceding claims, **characterized in that** the weight ratio of the sum of the at least one liquid epoxy resin **A1** and the at least one liquid epoxy resin **A2** to the at least one toughness improver **D ((A1+A2)/D)** is from 0.25 - 0.6, preferably 0.3 - 0.5, more preferably 0.35 - 0.55.

7. The thermosetting one-component epoxy resin composition as claimed in any of the preceding claims, **characterized in that** the thermosetting one-component epoxy resin composition additionally includes at least one plasticizer **PL**, preferably selected from the list consisting of phthalic acid diesters; dialkyl terephthalates; aliphatic carboxylic diesters; polyester-type polymers; adipic polyesters; phosphate esters; trimellitate esters; benzoate and dibenzoate esters; citrate esters and alkyl sulphonic esters of phenol, preferably selected from trimellitate esters.

8. The thermosetting one-component epoxy resin composition according to claim 7, **characterized in that** if the weight ratio of the sum of the at least one liquid epoxy resin **A1** and the at least one liquid epoxy resin **A2** to the at least one plasticizer **PL ((A1+A2)/PL)** is from 1 - 10, preferably 1.25 - 5, more preferably 1.5 - 3, even more preferably 1.75 - 2.5, most preferably 1.8 - 2.2.

9. The thermosetting one-component epoxy resin composition as claimed in any of the preceding claims, **characterized in that** the thermosetting one-component epoxy resin composition additionally includes at least one filler **F**, preferably selected from the group consisting of calcium carbonate, calcium oxide, talc, titanium oxide, and fumed silicas; preferably the total proportion of the filler **F** is 35-60% by weight preferably 45-55% by weight, more preferably 47.5-52.5% by weight, based on the total weight of the thermosetting one-component epoxy resin composition.

10. The thermosetting one-component epoxy resin composition as claimed in any of the preceding claims, **characterized in that** the ratio of the proportion of the sum of the epoxy groups of the liquid epoxy resins **A1** and **A2** in mol / proportion of curing agent **B** in mol **((A1+A2)/B)** is 3-8, preferably 4-7, more preferably 5-7, most preferably 5.5-6.5.

11. The thermosetting one-component epoxy resin composition as claimed in any of the preceding claims, **characterized in that** the ratio of the proportion of accelerator **C** in grams per mole of the sum of the epoxy groups of the liquid epoxy resins **A1** and **A2 ((A1+A2)/C)** is preferably 0.01-0.5 g/mol of epoxy groups, especially 0.05-0.3 g/mol of epoxy groups, more preferably 0.075-0.2 g/mol of epoxy groups, most preferably 0.08-0.15 g/mol of epoxy groups.

12. The thermosetting one-component epoxy resin composition as claimed in any of the preceding claims, **characterized in that** the proportion of the sum of the liquid epoxy resins **A1** and **A2** is 5-20% by weight, preferably 7.5-15% by weight, more preferably 10-12.5% by weight, based on the total weight of the one-component epoxy resin composition.

13. The thermosetting one-component epoxy resin composition as claimed in any of the preceding claims, **characterized in that** the epoxy resin composition has a viscosity at 23°C of 150 - 900 Pa*s, especially 200 - 800 Pa*s, preferably 200 - 400 Pa*s, more preferably 250 - 350 Pa*s.

14. The use of a thermosetting one-component epoxy resin composition as claimed in any of claims 1 to 13 as sealing compounds in autobody work, in particular in the engine space or for doors, trunk lids, tailgates or hoods.

15. A method for sealing which comprises the following steps:
i) Applying a thermosetting one-component epoxy resin composition according to any of the claims 1 - 13, to a substrate **(S);**
ii) Heating the thermosetting one-component epoxy resin composition to a temperature above 120°C, in particular between 160°C and 220°C, to form a cured thermosetting one-component epoxy resin composition, preferably step ii) is preferably performed in a CDC oven.

16. The method according to claim 15, wherein the thermosetting one-component epoxy resin composition is to be applied in or to a gap in step i), said gap being bordered by two surfaces of the substrate (S) and a second substrate (S2), the second substrate (S2) being made of the same material as the substrate (S) or a different material.
